# EUROPEAN PATENT APPLICATION

(11) **EP 4 293 588 A1**
(43) Date of publication of application: **20.12.2023**
(21) Application number: 22179425.8
(22) Date of filing: 16.06.2022
(51) Int. Cl.: G06Q 10/06, G06Q 10/10

(54) **A DEVICE AND METHOD FOR ENABLING RECURRENT PREPARATION OF A VEHICLE**

(71) Applicant: VOLVO TRUCK CORPORATION, 405 08 Göteborg (SE)
(72) Inventor: BJÖRNEMARK, Niklas, 423 51 Torslanda (SE); KARLSSON, Martin, 436 39 Askim (SE)
(74) Representative: Valea AB

(57) **Abstract**

The present invention relates to a method performed by a device (110) for enabling recurrent preparation of a vehicle (100). The device (110) displays one or more editable calendar items indicating a recurring time or schedule for when preparations of the vehicle (100) must be completed such that the vehicle (100) is ready for departure. The device (110) obtains user input via the editable calendar items indicating the recurring time or schedule when the vehicle (100) shall be ready for departure. The device (110) triggers the vehicle (100) to be ready for departure at the recurring time or schedule. The recurrence of the time or schedule is implemented using a RRULE of an RFC 5545 standard.

## Description

### TECHNICAL FIELD

The invention relates generally to a device, a method performed by the device, a vehicle, a computer program and a computer readable medium. More particularly, the invention relates to enabling recurrent preparation of a vehicle.

The invention can be applied in heavy-duty vehicles, such as trucks, buses and construction equipment etc. Although the invention may be described with respect to a truck, the invention is not restricted to this particular vehicle, but may also be used in other vehicles such as buses, trailers, wheel loaders, articulated haulers, excavators, backhoe loaders, passenger cars, marine vessels etc. It may also be applied in various industrial construction machines or working machines. It is applicable in fully electrically operated vehicles as well as in hybrid vehicles, comprising also a combustion engine, and in vehicles only operated by a combustion engine, i.e. not having any electrical engine. The term vehicle will be used herein when referring to any of the above types of vehicles.

### BACKGROUND

For different reasons, vehicles need to or can be prepared for departure. Examples of departure tasks may be that the high voltage traction batteries in electric vehicles need to be preconditioned, e.g. heated or cooled, the vehicle's cabin may preferably be climatized, the vehicle needs to be charged etc. To perform the different departure tasks, the user needs to trigger the relevant departure task. The departure might be one-shot but in general they are recurrent - e.g. the user wants his/her vehicle to be prepared every workday of the week.

Today, the user manually enters the departure tasks each time they should be performed. It is also possible to set up a plurality of successive departure tasks to be performed.

However, there is a constant need for further improvement and increased flexibility in the departure preparation of a vehicle.

### SUMMARY

An object of the invention is to provide improved preparation of a vehicle such that it is ready for departure.

According to a first aspect of the invention, the object is achieved by a method according to claim 1. The method is performed by a device for enabling recurrent preparation of a vehicle. The device displays one or more editable calendar items indicating a recurring time or schedule for when preparations of the vehicle must be completed such that the vehicle is ready for departure. The device obtains user input via the editable calendar items indicating the recurring time or schedule when the vehicle shall be ready for departure. The device triggers the vehicle to be ready for departure at the recurring time or schedule. The recurrence of the time or schedule is implemented using a Recurrence Rule (RRULE) of a Request for Comments (RFC) 5545 standard. By the provision of the method of the first aspect, the advantage of improved preparation of a vehicle for departure is provided. The method provides improved preparation of a vehicle such that it is ready for departure. By using the RFC 5545 standard, which is a well-known existing standard, it is easy to implement the recurring time or schedule. With the RFC 5545 standard, the method can be integrated in several different user interfaces, and it can be used on different platforms such as Android, IOS, Linux, Windows etc. The RFC 5545 provides a user-friendly interface for the user to input the recurring time or schedule for when his/her vehicle shall be ready for departure.

According to one embodiment, the one or more editable calendar items may be displayed on one or more display units. An advantage of this may be that it provides flexibility with regards to which display unit the user can choose to use when viewing the calendar items. For example, the one or more editable calendar items may be displayed on one or more of: a mobile phone, a tablet computer, a vehicle onboard display etc.

According to a further embodiment, the device may be integrated in and located onboard the vehicle, or the device may be a standalone and handheld unit, not integrated in the vehicle. An advantage of a device being integrated and located onboard the vehicle may be that it may be an existing device currently used for other purposes, and that can be extended to be used for the present invention. A device integrated and located onboard the vehicle may be arranged having driving safety in mind such that using the device for the current invention does not involve or involve a low safety risk when being used. There may not be any need for mounting an additional device in the vehicle when using a device that is integrated in and located onboard the vehicle. An advantage of using a standalone and handheld unit may be that it is easily accessible to the user, e.g. he/she often carries the device in his pocket and can be used even when the user is not in proximity of the vehicle.

According to another embodiment, the preparations of the vehicle may comprise one or more of: heating a battery, cooling the battery, climatizing a cabin and charging the vehicle etc. An advantage of this may be that a variety of vehicle functions may be prepared in advance, i.e. before departure. For example, climatizing the cabin may increase the comfort of the user of the vehicle, heating the battery may increase the charging range of an electric vehicle etc.

According to a second aspect of the invention, the object is achieved by a device for enabling recurrent preparation of a vehicle according to claim 5. The device is arranged to perform a method according to the first aspect. Advantages and effects of the second aspect of the invention are similar to the advantages and effects with respect to the first aspect of the invention. It shall also be noted that all embodiments of the first aspect of the invention are applicable to and combinable with all embodiments of the second aspect of the invention and vice versa.

According to a third aspect of the invention, the object is achieved by a vehicle according to claim 6. The vehicle comprises a device of the second aspect. Advantages and effects of the third aspect of the invention are similar to the advantages and effects with respect to the first aspect of the invention. It shall also be noted that all embodiments of the first aspect of the invention are applicable to and combinable with all embodiments of the third aspect of the invention and vice versa.

According to a fourth aspect of the invention, the object is achieved by a computer program according to claim 7. The computer program comprises program code means for performing the method of the first aspect when the computer program is run on a computer. The computer may be or may be comprised in the device of the second aspect. Advantages and effects of the fourth aspect of the invention are similar to the advantages and effects with respect to the first aspect of the invention. It shall also be noted that all embodiments of the first aspect of the invention are applicable to and combinable with all embodiments of the fourth aspect of the invention and vice versa.

According to a fifth aspect of the invention, the object is achieved by a computer readable medium according to claim 8. The computer readable medium carries a computer program comprising program code means for performing the method of the first aspect when the computer program is run on a computer. The computer may be the device of the second aspect or it may be comprised in the device of the second aspect. Advantages and effects of the fifth aspect of the invention are similar to the advantages and effects with respect to the first aspect of the invention. It shall also be noted that all embodiments of the first aspect of the invention are applicable to and combinable with all embodiments of the fifth aspect of the invention and vice versa.

The present disclosure is not limited to the features and advantages mentioned above. A person skilled in the art will recognize additional features and advantages upon reading the following detailed description.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic drawing illustrating a vehicle.
- Fig. 2: is a flow chart illustrating a method.
- Fig. 3: is a schematic drawing illustrating display of editable calendar items.
- Fig. 4a: is a schematic drawing illustrating a device.
- Fig. 4b: is a schematic drawing illustrating a device.

The drawings are not necessarily to scale, and the dimensions of certain features may have been exaggerated for the sake of clarity. Emphasis is instead placed upon illustrating the principle.

### DETAILED DESCRIPTION OF EXAMPLE EMBODIMENTS OF THE INVENTION

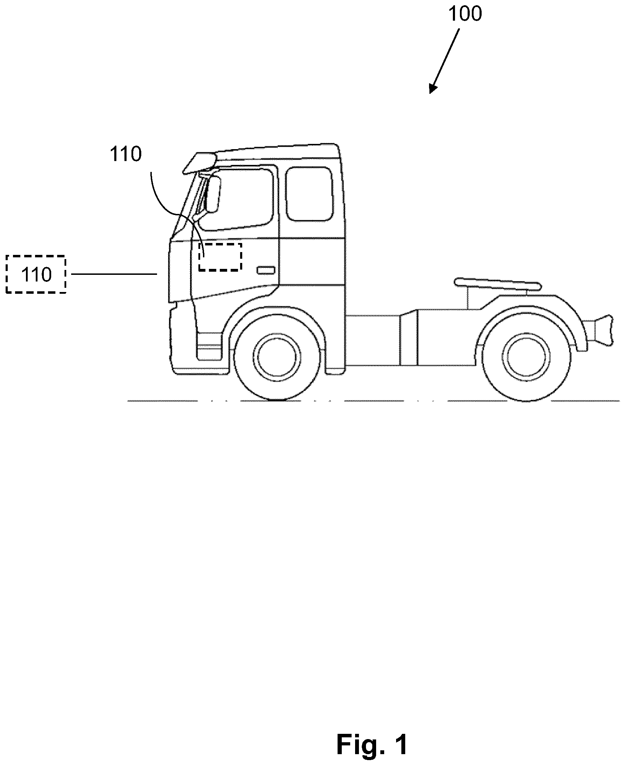

**Fig. 1** is a schematic drawing illustrating a **vehicle 100**. The vehicle may be a truck, bus, construction equipment, trailer, wheel loader, excavator, passenger car, a marine vessel, an electrically operated vessel, a working machine, stationary backup power solution etc., or any other type of vehicle mentioned herein. The vehicle 100 may be fully electrically operated or it may be a hybrid vehicle comprising an electrical engine and also a combustion engine. The vehicle 100 may be fully operated by a combustion engine, i.e. not having any electrical engine. The term vehicle will be used herein when referring to any of the above types of vehicles.

A **device 110** may be comprised in the vehicle 100 or arranged to be associated with the vehicle 110, e.g. the device 110 may be connected to the vehicle 100 via a wired connection and/or a wireless connection. The device 110 may be located onboard the vehicle 100, i.e. mounted inside the vehicle 100, integrated in and located onboard the vehicle 100, as illustrated with the dotted box inside the vehicle 100 in fig. 1. In other words the device 110 may be arranged to not being removed from the vehicle 100 on a daily basis, except for example for maintenance and repairing purposes. The device 110 may be located at any suitable location onboard the vehicle 100. The device 110 may be partly located onboard the vehicle 100 and partly located at some other location, e.g. a remote location. The device 110 may be a standalone and handheld unit, e.g. a mobile phone, a tablet computer etc., as illustrated with the dotted box outside the vehicle 100 in fig. 1. The device 110 may be referred to as a vehicle device, a vehicle unit, a control unit, a user equipment, a mobile phone, a tablet computer, a handheld device, a computer etc. The device 110 may be an electronic device. The device 110 may comprise processing circuitry which is adapted to run a computer program as disclosed herein. The device 110 may comprise hardware and/or software for performing the method described herein. The device 110 may be a computer or it may be comprised in a computer. The device 110 may communicate by use of wired and/or wireless communication means.

The device 110 may comprise one or more displays. One or more displays may be integrated in the device 100 and/or one or more displays may be connected to the device 110. Displays that are connected to the device may be referred to as external displays. The displays may be connected to the device 110 via a wired connection and/or a wireless connection.

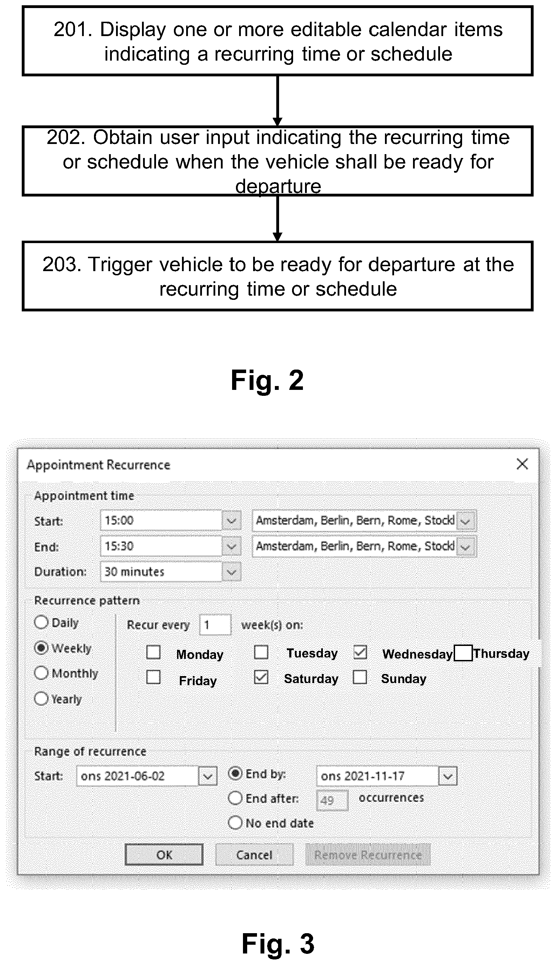

A method will now be described seen from the perspective of the device 110. Fig. 2 is a flowchart describing the present method in the device 110 for enabling recurrent preparation of a vehicle 100. The device 110 may be integrated in and located onboard the vehicle 100 or the device 110 may be a standalone and handheld unit. The method comprises at least one of the following steps to be performed by the device 110, which steps may be performed in any suitable order than described below:

### Step 201

The device 110 displays one or more editable calendar items indicating a recurring time or schedule for when preparations of the vehicle 100 must be completed such that the vehicle 100 is ready for departure. The recurrence of the time or schedule is implemented using a RRULE of the RFC 5545 standard.

The one or more editable calendar items may be displayed on one or more display units.

The one or more calendar items may be editable in that a free text may be inputted, that one item may be selected from a list of predetermined available items etc.

A calendar may be described as a system of organizing days. The calendar may be in the form of for example a table or list comprising days, weeks and months of a year or any other suitable format.

The preparations of the vehicle 100 may comprises one or more of: heating a battery, cooling the battery, climatizing a cabin and charging the vehicle 100.

The one or more editable calendar items may be displayed as exemplified in **fig. 3**. The preparation of the vehicle is exemplified as an appointment in fig. 3. The appointment may be for all feature of the vehicle 100 that should be prepared in order for the vehicle 100 to be ready for departure.

In the example in fig. 3, the one or more editable calendar items may comprise a start, end and duration of the preparation. The one or more editable calendar items may comprise a recurrence pattern, for example daily, weekly, monthly, yearly. The one or more editable calendar items may comprise which week the preparation should be completed, e.g. that it should recur every 1 week. The recurrence pattern may comprise on which day the preparation should be completed, e.g. Monday, Tuesday, Wednesday, Thursday, Friday, Saturday, Sunday. The one or more editable calendar items may comprise a range of the recurrence, for example a start date and an end date, an end after x number of occurrences, or no end date. Note that fig. 3 is only an example of the one or more editable calendar items and that any suitable layout, organization, number of calendar items, type of calendar items etc. may be different. For example, the one or more editable calendar items may only comprise the weekdays where the preparation of the vehicle may be executed.

### Step 202

The device 110 obtains user input via the editable calendar items indicating the recurring time or schedule when the vehicle 100 shall be ready for departure. The user input may be a selection amongst a plurality of predefined input alternatives, it may be free text, it may be ticking of a box, it may be a spoken input etc.

The user who inputs the user input may be the driver of the vehicle 100, the owner of the vehicle 100, an operator of the vehicle 100 or any other person associated with the vehicle 100 that is in charge of making the vehicle 100 ready for departure at a certain time.

The obtained user input may be stored in a memory, for example a local memory comprised in the device 110, a cloud memory or in any other remotely located memory storage.

### Step 203

The device 110 triggers the vehicle 100 to be ready for departure at the recurring time or schedule, as indicated by the user input. The triggering may be done after the user input has been obtained. The triggering of the vehicle 100 to be ready for departure may comprise to send instructions, via a wired and/or wireless connection, to the vehicle 100 to be ready for departure at the recurring time or schedule.

The triggering of the vehicle 100 may comprise to provide information about which features that should be started in advance of the vehicle departure, for example the traction battery should be heated, the cabin should be climatized etc.

The triggering of the vehicle 100 may comprise to provide information about to which level or threshold the features should reach when the vehicle 100 should be ready for departure. For example, the traction battery of the vehicle should be charged to 80% at departure, the cabin should have an inner temperature of 23 degrees Celsius at departure etc.

Which features and their level or threshold may be predetermined by the device 110, by the user, by the vehicle 100 or by some other suitable unit.

As mentioned above, the device 110 uses the existing standard RFC 5545. RFC 5545 is a data format for calendar and scheduling information such as events, to-dos, journal entries, free and busy information, time zone information etc. The RFC 5545 standard is independent of any particular calendar service or protocol. The data format of RFC 5545 may be referred to as an iCalendar format.

The device 110 uses the existing standard RFC 5545 to specify the recurrence of a time or schedule, and the RRULE function of the RFC 5545.

The recurrence may be specified using descriptive words:
*Every week on Wednesday, Saturday:*
RRULE:FREQ=WEEKLY; BYDAY=WE,SA.

The RRULE function describes a rule or repeating pattern for recurring vehicle departure, events, to-dos, journal entries, time zone definitions etc. The RRULE function is a known pattern that may easily be integrated in several different user interfaces. Multiple source code libraries exist to integrate the recurrence part in different user environments - Android, IOS, Linux, Windows, etc.

Using the known RFC 5545 standard also make integration to other vehicle IT systems easy. An example can be a planner tool for a fleet - example a truck going on a periodic, weekly schedule - depart at 7:00 every Monday, Wednesday, Friday but at 8:00 Tuesdays and Thursdays. With the present invention, the recurrence may be in a standardized format.

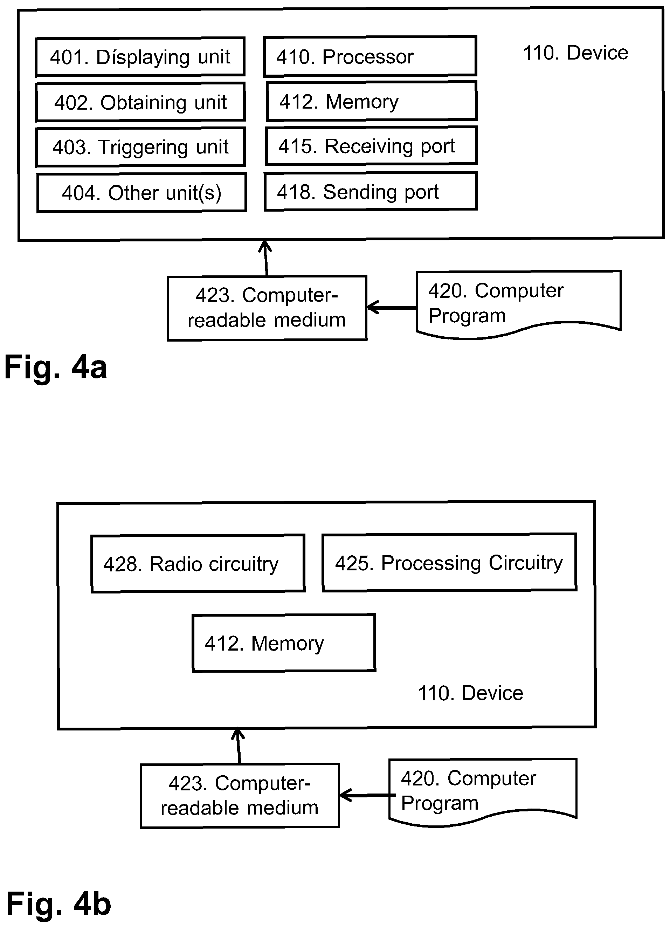

To perform the method steps shown in fig. 2 for enabling recurrent preparation of a vehicle 100, the device 110 may comprise an arrangement as shown in **fig. 4a** and/or **fig. 4b**. The device 110 may be integrated in and located onboard the vehicle 100 or the device 110 may be a standalone and handheld unit.

The device 110 is arranged to, e.g. by means of a **displaying unit 401**, display one or more editable calendar items indicating a recurring time or schedule for when preparations of the vehicle 100 must be completed such that the vehicle 100 is ready for departure. The recurrence of the time or schedule is implemented using a RRULE of the RFC 5545 standard. The one or more editable calendar items may be displayed on one or more display units. The preparations of the vehicle 100 may comprise one or more of: heating a battery, cooling the battery, climatizing a cabin and charging the vehicle 100. The displaying unit 401 may also be referred to as a displaying module, a displaying means, a displaying circuit, means for displaying etc. The displaying unit 401 may be a **processor 410** of the device 110 or comprised in the processor 410 of the device 110.

The device 110 is arranged to, e.g. by means of an **obtaining unit 402**, obtain user input via the editable calendar items indicating the recurring time or schedule when the vehicle 100 shall be ready for departure. The obtaining unit 402 may also be referred to as an obtaining module, an obtaining means, an obtaining circuit, means for obtaining etc. The obtaining unit 402 may be the processor 410 of the device 110 or comprised in the processor 410 of the device 110. The obtaining unit 402 may be a receiving unit or a transceiver unit.

The device 110 is arranged to, e.g. by means of a **triggering unit 403**, trigger the vehicle 100 to be ready for departure at the recurring time or schedule. The triggering unit 403 may also be referred to as a triggering module, a triggering means, a triggering circuit, means for triggering etc. The triggering unit 403 may be the processor 410 of the device 110 or comprised in the processor 410 of the device 110.

The present mechanism for enabling recurrent preparation of a vehicle 100 may be implemented through one or more processors, such as the processor 410 in the arrangement depicted in fig. 4a and/or fig. 4b, together with computer program code for performing the functions described herein. The processor may be for example a Digital Signal Processor (DSP), Application Specific Integrated Circuit (ASIC) processor, Field-programmable gate array (FPGA) processor or microprocessor. The program code mentioned above may also be provided as a computer program, for instance in the form of a data carrier carrying computer program code for performing the present disclosure herein when being loaded into the device 110. One such carrier may be in the form of a CD ROM disc. It is however feasible with other data carriers such as a memory stick. The computer program code can be provided as pure program code on a server and downloaded to the device 110.

Fig. 4a and fig. 4b depict two different examples in panels 4a) and 4b), respectively, of the arrangement that the device 110 may comprise. The device 110 may comprise the following arrangement depicted in fig 4a.

The present disclosure related to the device 110 may be implemented through one or more processors, such as the processor 410 in the device 110 depicted in fig. 4a, together with computer program code for performing the functions and actions described herein. A processor, as used herein, may be understood to be a hardware component. The program code mentioned above may also be provided as a computer program, for instance in the form of a data carrier carrying computer program code for performing the present disclosure when being loaded into the device 110. One such carrier may be in the form of a CD ROM disc. It is however feasible with other data carriers such as a memory stick. The computer program code may be provided as pure program code on a server and downloaded to the device 110.

The device 110 may comprise a **memory 412** comprising one or more memory units. The memory 412 is arranged to be used to store obtained information, store data, user input, instructions, triggering information, vehicle information, configurations, schedulings, and applications etc. to perform the methods herein when being executed in the device 110.

The device 110 may receive information from, e.g. other vehicle systems, a remote storage, another vehicle, another device etc, through a **receiving port 415.** The receiving port 415 may be, for example, connected to one or more antennas in device 110. The device 110 may receive information from another structure in the system through the receiving port 415. Since the receiving port 415 may be in communication with the processor 410, the receiving port 415 may then send the received information to the processor 410. The receiving port 415 may also be configured to receive other information.

The processor 410 in the device 110 may be configured to transmit or send information to e.g. other vehicle systems, a remote storage, another vehicle, another device etc, through a **sending port 418**, which may be in communication with the processor 410, and the memory 412.

The device 110 may comprise the displaying unit 401, the obtaining unit 402, the triggering unit 403 and other unit(s) 404.

Those skilled in the art will also appreciate that displaying unit 401, the obtaining unit 402, the triggering unit 403 and other unit(s) 404 described above may refer to a combination of analogue and digital circuits, and/or one or more processors configured with software and/or firmware, e.g., stored in memory, that, when executed by the one or more processors such as the processor 410, perform as described above. One or more of these processors, as well as the other digital hardware, may be comprised in a single Application-Specific Integrated Circuit (ASIC), or several processors and various digital hardware may be distributed among several separate components, whether individually packaged or assembled into a System-on-a-Chip (SoC).

The different units 401-404 described above may be implemented as one or more applications running on one or more processors such as the processor 410.

Thus, the method described herein for the device 110 may be implemented by means of a **computer program 420,** comprising instructions, i.e., software code portions, which, when executed on at least one processor 410, cause the at least one processor 410 to carry out the actions described herein, as performed by the device 110. The computer program 420 may be stored on a **computer-readable storage medium 423.** The computer-readable storage medium 423, having stored thereon the computer program 420, may comprise instructions which, when executed on at least one processor 410, cause the at least one processor 410 to carry out the actions described herein, as performed by the device 110. The computer-readable storage medium 423 may be a non-transitory computer-readable storage medium, such as a CD ROM disc, or a memory stick. The computer program 420 may be stored on a carrier containing the computer program 420 just described. The carrier is one of an electronic signal, optical signal, radio signal, or the first computer-readable storage medium 423, as described above.

The device 110 may comprise a communication interface configured to facilitate communications between the device 110 and other or devices, e.g., e.g. other vehicle systems, a remote storage, another vehicle, or another structure. The interface may comprise a transceiver configured to transmit and receive radio signals over an air interface in accordance with a suitable standard.

The device 110 may comprise the following arrangement depicted in fig. 4b. The device 110 may comprise a **processing circuitry 425**, e.g., one or more processors such as the processor 410, in the device 110 and the memory 412. The device 110 may also comprise a **radio circuitry 428**, which may comprise e.g., the receiving port 415 and the sending port 418. The processing circuitry 425 may be configured to, or operable to, perform the method actions according to fig. 2, in a similar manner as that described in relation to fig. 4a. The radio circuitry 428 may be configured to set up and maintain at least a wireless connection with the device 110. Circuitry may be understood herein as a hardware component.

Summarized, a vehicle 100 is often used in a recurring manner, e.g. the user travels to and from work every workday of the week and at the same hours. With the present invention, the user can easily input this recurring event in for example his mobile phone. He does not have to manually start the vehicle preparations every time he is going to work, but only needs to input the recurring event once. The present invention relates to using the RFC 5545 standard for when to prepare the vehicle 100 for departure. In other words, the vehicle 100 is prepared for departure where the recurrence is based on a standard, RFC 5545. The standard is also used by to specify the recurrence of a meeting. With the RFC 5545 standard, it is easy to define the recurrence in different user interfaces since source code libraries exists in many languages that can be integrated. Also basing the recurrence on a standard make integration to other IT systems easy.

The recurrence by the present invention is flexible to fit many use cases, e.g. daily, weekly, selected days in a week etc. It is possible to perform the recurrence from many different user interfaces in the vehicle 100, in the mobile app, in the fleet portal etc.

The present invention is not limited to the above. Various alternatives, modifications and equivalents may be used. Therefore, disclosure herein should not be taken as limiting the scope. A feature may be combined with one or more other features.

The term "at least one of A and B" should be understood to mean "only A, only B, or both A and B.", where A and B are any parameter, number, indication used herein etc.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

The term "configured to" used herein may also be referred to as "arranged to", "adapted to", "capable of" or "operative to".

The steps of the methods may be performed in another order than the order in which they appear herein.

## Claims

1. A method performed by a device (110) for enabling recurrent preparation of a vehicle (100), the method comprising:
*displaying* (201) one or more editable calendar items indicating a recurring time or schedule for when preparations of the vehicle (100) must be completed such that the vehicle (100) is ready for departure;
*obtaining* (202) user input via the editable calendar items indicating the recurring time or schedule when the vehicle (100) shall be ready for departure; and
*triggering* (203) the vehicle (100) to be ready for departure at the recurring time or schedule,
wherein the recurrence of the time or schedule is implemented using a Recurrence Rule, RRULE, of a Request for Comments, RFC, 5545 standard.

2. The method according to claim 1, wherein the one or more editable calendar items are displayed on one or more display units.

3. The method according to any of the preceding claims, wherein the device (110) is integrated in and located onboard the vehicle (100) or
wherein the device (110) is a standalone and handheld unit.

4. The method according to any of the preceding claims, wherein the preparations of the vehicle (100) comprises one or more of: heating a battery, cooling the battery, climatizing a cabin and charging the vehicle (100).

5. A device (110) for enabling recurrent preparation of a vehicle (100), the device (110) being arranged to perform a method according to any of claims 1-4.

6. A vehicle (100) comprising a device according to claim 5.

7. A computer program comprising program code means for performing the steps of any of claims 1-4 when the computer program is run on a computer.

8. A computer readable medium carrying a computer program comprising program code means for performing the steps of any of claims 1-4 when the computer program is run on a computer.
